# EUROPEAN PATENT APPLICATION

(11) **EP 3 738 878 A1**
(43) Date of publication of application: **18.11.2020**
(21) Application number: 19210613.6
(22) Date of filing: 21.11.2019
(51) Int. Cl.: B64D 11/00

(54) **SMART NIGHT-LIGHTING OF AIRCRAFT CABIN**

(30) Priority: 17.05.2019 US 201916415824
(71) Applicant: Goodrich Corporation, Charlotte, NC 28217-4578 (US)
(72) Inventor: PEARSON, Matthew Robert, Hartford, CT 06103 (US); DORGAN, Alexandria, West Hartford, CT 06107 (US)
(74) Representative: Dehns

(57) **Abstract**

A lighting system is disclosed. In various embodiments, the lighting system includes a plurality of lights (224) disposed along a pathway (306); a sensor (240) configured to detect a location of a moveable object (350) along the pathway (306); and a processor (380) configured to adjust an intensity of one or more of the plurality of lights in response to the location of the moveable object (350).

## Description

### FIELD

The present disclosure relates generally to lighting systems and, more particularly, to adjustable lighting systems for aircraft cabins.

### BACKGROUND

Aircraft cabins typically include lighting systems that may be turned on or off, depending on need or environmental factors. The lighting systems may include passenger overhead lighting (*e.g.,* individual reading lights), aisle lighting (*e.g.,* overhead and under-seat lights spaced along a cabin passageway) and sign lighting (*e.g*., lights for lavatory and exit signs). In various instances, the lighting may be adjustable between on and off states, depending, for example, whether the flight is occurring during daylight or darkness or whether cabin service is occurring. Adjustable lighting conditions between on and off states may be desirable, for example, based on the time of day or the activity of a passenger or crew member.

### SUMMARY

A lighting system is disclosed. In various embodiments, the lighting system includes a plurality of lights disposed along a pathway; a sensor configured to detect a location of a moveable object along the pathway; and a processor configured to adjust an intensity of two or more of the plurality of lights in response to the location of the moveable object.

In various embodiments, the plurality of lights includes a first light, a second light and a third light and the processor is configured to set the first light at a first light intensity greater than a second light intensity of the second light and a third light intensity of the third light in response to the location of the moveable object being closer to the first light than to the second light or to the third light. In various embodiments, the second light intensity is equal to the third light intensity.

In various embodiments, the pathway defines a longitudinal axis having a forward end and an aft end and the second light is disposed aft of the first light. In various embodiments, the third light is disposed forward of the first light. In various embodiments, a fourth light is disposed aft of the second light and a fifth light is disposed forward of the third light. In various embodiments, the processor is configured to set the fourth light at a fourth light intensity less than the second light intensity and the fifth light at a fifth light intensity less than the third light intensity. In various embodiments, the fourth light intensity is equal to the fifth light intensity. In various embodiments, the sensor is a proximity sensor configured to detect the location of the moveable object. In various embodiments, the proximity sensor includes at least one of a photoelectric sensor, a pressure sensor or a camera.

A lighting system for an aircraft cabin is disclosed. In various embodiments, the lighting system includes a plurality of lights disposed along an aisle of the aircraft cabin; a plurality of proximity sensors disposed along the aisle and configured to detect a location of a moveable object along the aisle; and a processor configured to adjust an intensity of two or more of the plurality of lights in response to the location of the moveable object.

In various embodiments, the plurality of lights includes a first light, a second light and a third light and the processor is configured to set the first light at a first light intensity greater than a second light intensity of the second light and a third light intensity of the third light in response to the location of the moveable object being closer to the first light than to the second light or to the third light.

In various embodiments, the aisle defines a longitudinal axis having a forward end and an aft end and the second light is disposed aft of the first light and the third light is disposed forward of the first light. In various embodiments, a fourth light is disposed aft of the second light and a fifth light is disposed forward of the third light. In various embodiments, the processor is configured to set the fourth light at a fourth light intensity less than the second light intensity and the fifth light at a fifth light intensity less than the third light intensity. In various embodiments, the second light intensity is about ten percent to about ninety percent of the first light intensity.

A method of adjusting lighting within an aircraft cabin is disclosed. In various embodiments, the method includes the steps of: transmitting a signal containing location data of a moveable object to a processor; determining a location of the moveable object based on the location data; and adjusting a lighting configuration surrounding the moveable object in response to the location of the moveable object.

In various embodiments, the adjusting the lighting configuration includes setting a first light intensity of a first light greater than a second light intensity of a second light and a third light intensity of a third light in response to the location of the moveable object being closer to the first light than to the second light or to the third light. In various embodiments, the adjusting the lighting configuration includes setting a fourth light intensity of a fourth light less than the second light intensity and a fifth light intensity of a fifth light less than the third light intensity in response to the location of the moveable object being closer to the first light than to the second light or to the third light.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B are schematic illustrations of a floorplan of an aircraft cabin, in accordance with various embodiments;
FIG. 2 is a schematic cross sectional view of an aircraft cabin, in accordance with various embodiments;
FIG. 3 is a schematic view of a cabin lighting system, in accordance with various embodiments; and
FIG. 4 describes a method of adjusting lighting within an aircraft, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

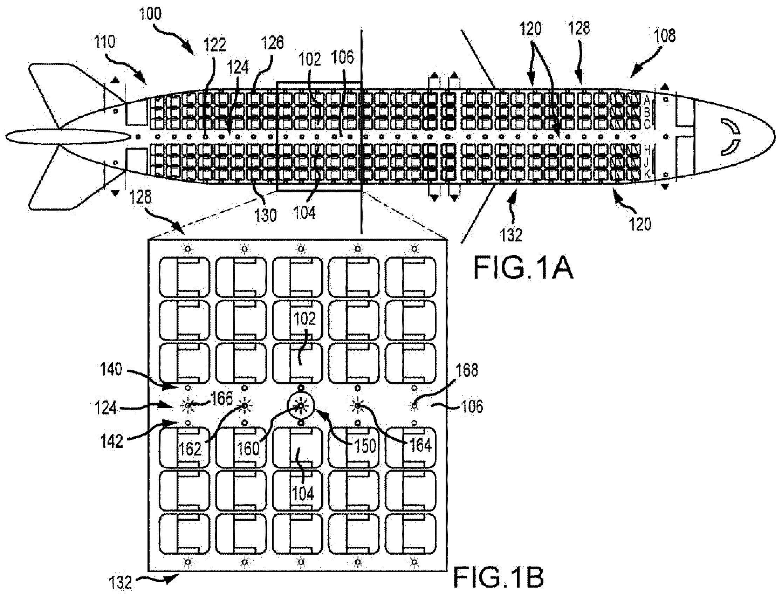

Referring to the drawings, FIGS. 1A and 1B provide schematic overhead views of an aircraft cabin 100, where FIG. 1A illustrates the aircraft cabin 100 in its entirety and FIG. 1B illustrates a section of the aircraft cabin 100. In various embodiments, the aircraft cabin 100 includes a first seat 102 (or a left-side or port-side seat) and a second seat 104 (or a right-side or starboard-side seat) spaced laterally from the first seat 102 with an aisle 106 extending between the first seat 102 and the second seat 104. More generally, the first seat 102 is one of a plurality of first seats and the second seat 104 is one of a plurality of second seats, with the plurality of first seats and the plurality of second seats being separated by the aisle 106 which, in various embodiments, may extend along a longitudinal axis running from a forward end 108 to an aft end 110 of the aircraft cabin 100. While the disclosure is presented in terms of a single aisle separating the plurality of first seats and the plurality of second seats, the disclosure is not limited to such configurations and contemplates cabin arrangements having two or more aisles separating pluralities of seats on either side of each aisle or similar other cabin seating arrangements.

Referring still to FIGS. 1A and 1B, a cabin lighting system 120 may include an aisle light 122, where the aisle light 122 is one of a plurality of aisle lights 124 that extend from the forward end 108 to the aft end 110 of the aircraft cabin 100. Similarly, the cabin lighting system 120 may include a left-side light 126 (or a port-side light) from among a plurality of left-side lights 128 and a right-side light 130 (or a starboard-side light) from a plurality of right-side lights 132, where the plurality of left-side lights 128 and the plurality of right-side lights 132 extend from the forward end 108 to the aft end 110 of the aircraft cabin 100. In various embodiments, the plurality of aisle lights 124, the plurality of left-side lights 128 and the plurality of right-side lights 132 may be disposed at overhead locations or floor locations or at locations in between.

Referring more specifically to FIG. 1B, the cabin lighting system 120 may further include a first plurality of proximity sensors 140 and a second plurality of proximity sensors 142, where the first plurality of proximity sensors 140 and the second plurality of proximity sensors 142 extend from the forward end 108 to the aft end 110 of the aircraft cabin 100. Either or both of the first plurality of proximity sensors 140 and the second plurality of proximity sensors 142 are configured to detect a moveable object 150 (*e.g.,* a cart, a passenger or a flight attendant) traversing along the aisle 106 (or stopped at a specific location along the aisle 106) and to activate in a proximity of the moveable object 150 one or more of the plurality of aisle lights 124 or, in various embodiments, one or more of the plurality of left-side lights 128 or one or more of the plurality of right-side lights 132. For example, as illustrated in FIG. 1B, while the moveable object 150 is in the vicinity of the first seat 102 and the second seat 104, respective ones of the plurality of aisle lights 124 in the vicinity of the first seat 102 and the second seat 104 are activated, while the other ones of the plurality of aisle lights 124 remain in a deactivated state.

In various embodiments, the cabin lighting system 120 may be configured to transition the plurality of aisle lights 124 such that, a first aisle light 160 in the immediate vicinity of the moveable object 150 is fully activated, while a second aisle light 162 located aft of the first aisle light 160 and a third aisle light 164 located forward of the first aisle light 160 are partially activated. The remainder of the plurality of aisle lights 124, aside from the first aisle light 160, the second aisle light 162 and the third aisle light 164, remain deactivated. Stated otherwise, the first aisle light 160 may be set at a first light intensity (or intensity or power level) that is greater than a second light intensity of the second aisle light 162 and a third light intensity of the third aisle light 164 in response to the location of the moveable object 150 being closer to the first aisle light 160 than to the second aisle light 162 or to the third aisle light 164.

While the disclosure contemplates the transition of lighting using the three aisle lights just described, the disclosure is not so limited and contemplates smoother transitions using, for example, the first aisle light 160 being surrounded by the second aisle light 162 and the third aisle light 164, with a fourth aisle light 166 being located aft of the second aisle light 162 and a fifth aisle light 168 being located forward of the third aisle light 164. In various embodiments, for example, the first aisle light 160 in the immediate vicinity of the moveable object 150 is fully activated, the second aisle light 162 and the third aisle light 164 are set at 2/3 full activation, and the fourth aisle light 166 and the fifth aisle light 168 are set at 1/3 full activation. As used herein, full activation or full intensity is intended to refer to the upper end of the standard operating range of a dimmable light bulb, such as, for example, a dimmable light emitting diode (LED) light bulb. For example, full activation or full intensity may, in various embodiments, encompass ninety percent (90%) to one-hundred percent (100%) of the maximum intended output (*e.g*., power or luminosity). Similarly, partial activation or partial intensity may, in various embodiments, encompass a range greater than zero percent (>0%) to less than one-hundred percent (<100%) of full activation or full intensity. The disclosure contemplates additional lights being incorporated into the process to further smooth the transition process from lights being fully activated or illuminated to being fully deactivated. Further, while the disclosure describes the transition process above using aisle lights in various embodiments, the disclosure is not so limited and contemplates more general applications using, for example, a first light, a second light, a third light, a fourth light and a fifth light being set at, variously during the transition process, a first light intensity, a second light intensity, a third light intensity, a fourth light intensity and a fifth light intensity.

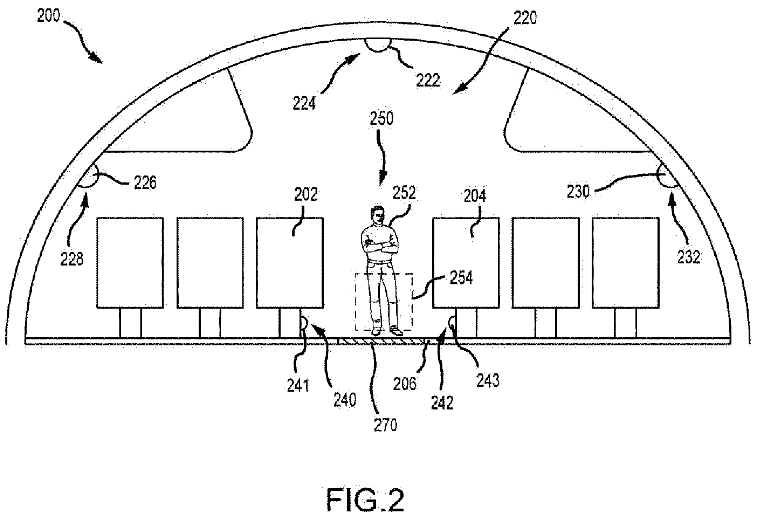

Referring now to FIG. 2, a cross section of an aircraft cabin 200 having a cabin lighting system 220 is illustrated. In various embodiments, the cabin lighting system 220 includes an aisle light 222, where the aisle light 222 is one of a plurality of aisle lights 224 that extend from a forward end to an aft end of the aircraft cabin 200. Similarly, the cabin lighting system 220 may include a left-side light 226 (or a port-side light) from among a plurality of left-side lights 228 and a right-side light 230 (or a starboard-side light) from a plurality of right-side lights 232, where the plurality of left-side lights 228 and the plurality of right-side lights 232 extend from the forward end to the aft end of the aircraft cabin 200. In various embodiments, the plurality of aisle lights 224 may be disposed at an overhead location, while the plurality of left-side lights 228 and the plurality of right-side lights 232 may be disposed at side locations or at floor locations.

The cabin lighting system 220 may further include a first plurality of proximity sensors 240, including a first proximity sensor 241 disposed on or adjacent a first seat 202, and a second plurality of proximity sensors 242, including a second proximity sensor 243 disposed on or adjacent a second seat 204, the first plurality of proximity sensors 240 and the second plurality of proximity sensors 242 extending from the forward end to the aft end of the aircraft cabin 200. Each sensor within either or both of the first plurality of proximity sensors 240 and the second plurality of proximity sensors 242 is configured to detect a moveable object 250 (*e.g.,* a human 252, which may include a passenger or a flight attendant, or a cart 254) traversing along an aisle 206 (or stopped at a specific location along the aisle 206) and to activate in a proximity of the moveable object 250 one or more of the plurality of aisle lights 224 or, in various embodiments, one or more of the plurality of left-side lights 228 or one or more of the plurality of right-side lights 232 as described above with reference to FIG. 1B. In various embodiments, one or more of the sensors comprising the various aforementioned pluralities of sensors may comprise a photoelectric sensor configured to detect the presence of an object without physical contact with the object. More broadly, the disclosure contemplates the proximity sensors as comprising any sensor configured to detect motion, including, for example, microwave sensors, ultrasonic sensors and camera-based sensors, such as, for example, digital cameras having software configured to detect motion within a field of view. In various embodiments, a pressure sensitive pad 270 (or a pressure sensor or a plurality of pressure sensors) may be disposed along a length of the aisle 206, or at intervals along the length of the aisle 206, to detect the position of the moveable object via a force imparted against the pressure sensitive pad 270 by the moveable object 250.

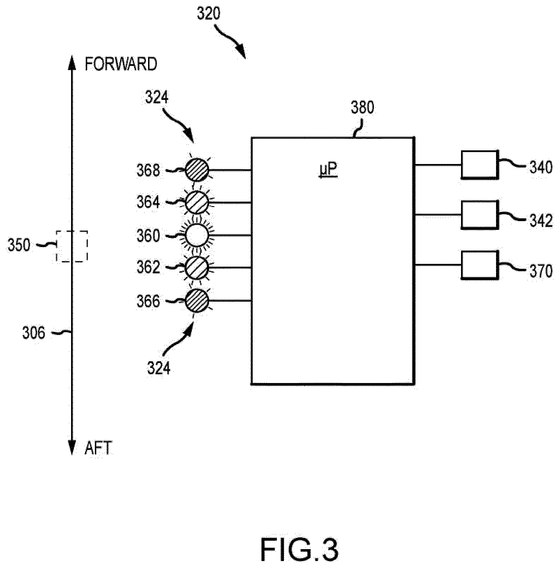

Referring now to FIG. 3, a processor 380 is illustrated as being a component of a cabin lighting system 320, such as, for example, the cabin lighting system 120 described above with reference to FIGS. 1A and 1B or the cabin lighting system 220 described above with reference to FIG. 2. In various embodiments, the processor 380 is configured to receive input signals from one or more of a first plurality of proximity sensors 340 and a second plurality of proximity sensors 342, such as, for example, the first plurality of proximity sensors 140 and the second plurality of proximity sensors 142 described above with reference to FIGS. 1A and 1B or the first plurality of proximity sensors 240 and the second plurality of proximity sensors 242 described above with reference to FIG. 2. In various embodiments, the processor is also configured to receive input signals from a pressure sensitive pad 370, such as, for example, the pressure sensitive pad 270 described above with reference to FIG. 2.

In various embodiments, the processor 380 is also configured to generate output signals to control operation of a plurality of lights, such as, for example, a plurality of aisle lights 324. Similar to operation of the cabin lighting system 120 described above with reference to FIGS. 1A and 1B, the processor 380 is configured, in various embodiments, to transition the activation or deactivation of members within the plurality of aisle lights 324, depending on the location of a moveable object 350 traversing along an aisle 306 within an aircraft cabin. Similar to the above description, the plurality of aisle lights 324 may include, for purposes of description, a first aisle light 360 that is fully activated or illuminated (*e.g*., the light is powered at full intensity) when the moveable object 350 is detected in the proximity of the first aisle light 360. A second aisle light 362 aft of the first aisle light 360 and a third aisle light 364 forward of the first aisle light 360 may be partially activated or illuminated (*e.g*., at 2/3 full illumination or intensity), while a fourth aisle light 366, aft of the second aisle light 362, and a fifth aisle light 368, forward of the third aisle light 364, may be partially activated or illuminated (*e.g.,* at 1/3 full illumination or intensity). As the moveable object 350 traverses the aisle 306, say, for example, in the forward direction, the processor 380 will receive input signals from the sensors, detect the moveable object 350 in the proximity of the third aisle light 364 (after passing by the first aisle light 360), and, in response, fully activate the third aisle light 364, reduce illumination at the second aisle light 362 to 1/3 of full illumination or intensity, deactivate the fourth aisle light 366 and increase illumination at the fifth aisle light 368 to 2/3 full illumination or intensity. The process repeats accordingly as the moveable object 350 traverses in the forward or aft directions such that the aisle light proximate the moveable object 350 is at full illumination or intensity while the aisle lights progressively further away from the moveable object 350 are progressively transitioned from full illumination to a deactivated state.

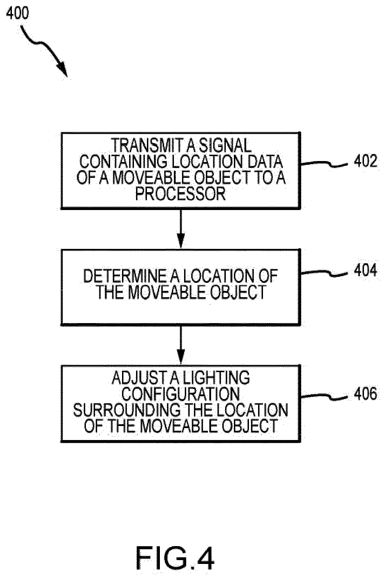

Referring now to FIG. 4, a method 400 of adjusting lighting within an aircraft is described. In a first step 402, a signal containing location data of a moveable object is transmitted to and received by a processor. In a second step 404, the processor determines the location of the moveable object. In a third step 406, a lighting configuration surrounding the moveable object is adjusted such that an area surrounding the moveable object is illuminated. In various embodiments, the step of adjusting the lighting configuration surrounding the moveable object comprises setting a first light closest to the moveable object to a full intensity; setting a second light aft of the first light and a third light forward of the first light to a first partial intensity; and setting a fourth light aft of the second light and a fifth light forward of the third light to a second partial intensity, where the second partial intensity is less than the first partial intensity.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A lighting system (220), comprising:
a plurality of lights (224) disposed along a pathway (306);
a sensor (240) configured to detect a location of a moveable object along the pathway; and
a processor (380) configured to adjust an intensity of two or more of the plurality of lights (224) in response to the location of the moveable object (350).

2. The lighting system of claim 1, wherein the plurality of lights includes a first light, a second light and a third light and the processor is configured to set the first light at a first light intensity greater than a second light intensity of the second light and a third light intensity of the third light in response to the location of the moveable object being closer to the first light than to the second light or to the third light.

3. The lighting system of claim 2, wherein the second light intensity is equal to the third light intensity.

4. The lighting system of claim 3, wherein the pathway defines a longitudinal axis having a forward end and an aft end and the second light is disposed aft of the first light.

5. The lighting system of claim 4, wherein the third light is disposed forward of the first light.

6. The lighting system of claim 5, further comprising a fourth light disposed aft of the second light and a fifth light disposed forward of the third light.

7. The lighting system of claim 6, wherein the processor is configured to set the fourth light at a fourth light intensity less than the second light intensity and the fifth light at a fifth light intensity less than the third light intensity.

8. The lighting system of claim 7, wherein the fourth light intensity is equal to the fifth light intensity.

9. The lighting system of any preceding claim, wherein the sensor is a proximity sensor configured to detect the location of the moveable object.

10. The lighting system of claim 9, wherein the plurality of lights includes a first light and a second light and the processor is configured to set the first light at a first light intensity greater than a second light intensity of the second light in response to the location of the moveable object being closer to the first light than to the second light, and optionally wherein the proximity sensor includes at least one of a photoelectric sensor, a pressure sensor or a camera.

11. The lighting system of any preceding claim, wherein the lighting system is for an aircraft cabin,
wherein said pathway is an aisle of the aircraft cabin,
said plurality of lights disposed along said aisle of the aircraft cabin; and
a plurality of said proximity sensors disposed along the aisle and configured to detect a location of a moveable object along the aisle.

12. The lighting system of claim 11, wherein the plurality of lights includes a first light, a second light and a third light and the processor is configured to set the first light at a first light intensity greater than a second light intensity of the second light and a third light intensity of the third light in response to the location of the moveable object being closer to the first light than to the second light or to the third light, and
wherein the aisle defines a longitudinal axis having a forward end and an aft end and the second light is disposed aft of the first light and the third light is disposed forward of the first light, and further comprising:
a fourth light disposed aft of the second light and a fifth light disposed forward of the third light.

13. The lighting system of claim 12, wherein the processor is configured to set the fourth light at a fourth light intensity less than the second light intensity and the fifth light at a fifth light intensity less than the third light intensity, and optionally
wherein the second light intensity is about ten percent to about ninety percent of the first light intensity.

14. A method of adjusting lighting within an aircraft cabin, comprising:
transmitting a signal containing location data of a moveable object (350) to a processor (380);
determining a location of the moveable object (350) based on the location data; and
adjusting a lighting configuration surrounding the moveable object (350) in response to the location of the moveable object (350).

15. The method of claim 14, wherein the adjusting the lighting configuration includes setting a first light intensity of a first light greater than a second light intensity of a second light and a third light intensity of a third light in response to the location of the moveable object being closer to the first light than to the second light or to the third light, and optionally wherein the adjusting the lighting configuration includes setting a fourth light intensity of a fourth light less than the second light intensity and a fifth light intensity of a fifth light less than the third light intensity in response to the location of the moveable object being closer to the first light than to the second light or to the third light.
